# EUROPEAN PATENT SPECIFICATION

(11) **EP 1 422 769 B1**
(45) Date of publication and mention of the grant of the patent: **11.07.2007**
(21) Application number: 03015600.4
(22) Date of filing: 15.07.2003
(51) Int. Cl.: H01M 2/20, H01M 10/48, H01M 2/30, H01M 10/04, H01M 10/40

(54) **Stack type battery with unit cell voltage measurement tabs**
Batteriestapel mit Anschlussfahnen zur Messung der Einzelzellspannung
Empilement de cellules avec des languettes pour la mesure de tension des cellules élémentaires

(30) Priority: 26.08.2002 JP 2002245144
(43) Date of publication of application: 26.05.2004
(73) Proprietor: NISSAN MOTOR CO., LTD., Yokohama-shi Kanagawa-ken (JP)
(72) Inventor: Hisamitsu, Yasunari, Yokosuka-shi, Kanagawa-ken (JP); Fukuzawa, Tatsuhiro, Yokosuka-shi, Kanagawa-ken (JP); Nemoto, Kouichi, Zushi-shi, Kanagawa-ken (JP); Ohsawa, Yasuhiko, Yokosuka-shi, Kanagawa-ken (JP)
(74) Representative: Weber, Joachim

(56) References cited:
- EP-A- 0 932 240
- WO-A-00/41253
- US-A- 6 120 935
- US-A1- 2002 012 833
- US-B1- 6 278 280

## Description

### BACKGROUND OF THE INVENTION

The present invention relates to a stack type battery and a related method and, more particularly, to a stack type battery and its related method that are able to measure a voltage for each unit cell.

Recently, reduction in emission of carbon dioxide for environmental protection is earnestly desired. In an automobile field, reduction in emission of carbon dioxide through introduction of electric vehicles (EV) and hybrid electric vehicles (HEV) has been highly expected, and research and development work has been diligently done to provide a motor driving secondary battery that has a key to be put into a practical use. As the secondary battery, the spotlight of attention is focused upon a lithium battery (lithium ion battery) that can achieve a high energy density and high power output density.

In particular, in order for the secondary battery to ensure a high power output to be applied to an automotive vehicle, there has been a proposal to provide a stack type battery comprised of a plurality of secondary batteries (with each battery being hereinafter referred to as a unit cell) that are connected in series.

Japanese Patent Application Laid-Open Publication No. 2001-250741 is related to a capacitor that differs from a battery in a technical field but discloses a structure wherein, in a stack type electric double layer capacitor composed of a plurality of stacked capacitors, shared voltage measurement tab electrodes are formed on each of the plurality of capacitors for measuring shared voltages.

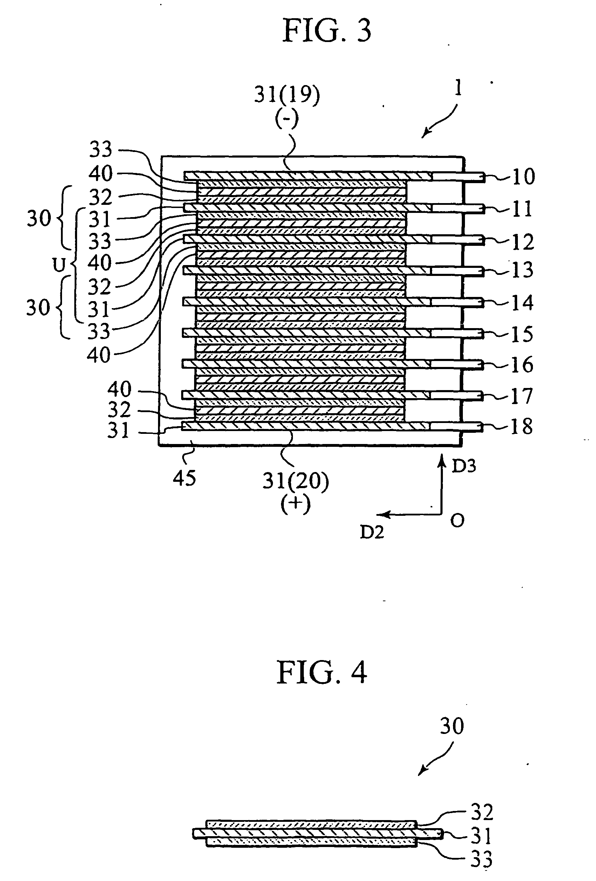

WO00/41253 discloses a battery stack comprising a plurality of unit cells which may be lithium ion cells. Each unit cell comprises an anode tab and a cathode tab. The unit cells are connected via the tabs to a circuit board. According to the embodiment of Fig. 3a and 3b, an arrangement of three unit cells, and according to the embodiment of Fig. 4a - 4e an arrangement of four unit cells is shown. The unit cells are electrically connected in series. The tabs, which connect the unit cells, protrude laterally and are suitable for measuring the voltage between the unit cells.

US-A-6 120 935 discloses an accumulator which comprises at least two laminar electrodes. The embodiment of Fig. 3 - 5 shows an arrangement in which three unit cells are connected in series using tabs and connection bodies.

US 2002/012833 A1 discloses a monoblock design having an improved thermal management and an improved structural integrity. This reference teaches a monoblock battery, which may use lithium ion cells. The embodiment according to Fig. 4 and 5 shows an arrangement of ten cells, which are connected by a connection spacer. US-B-6 278 2801 discloses a multi-cell battery including a circuit, which has a function in preventing an overcharging of a unit cell.

Finally, EP-A-0 932 240 discloses a multi-cell vehicle lithium battery aiming at the solution of the problem of variation in charges of said battery. To this end, said reference suggests to put the battery modules under the seats of a car.

### SUMMARY OF THE INVENTION

Here, upon studies conducted by the present inventors, it is preferred for the stack type battery to idealistically allow respective unit cells to share voltages to provide a ratio of (charging voltage) / (the number of unit cells connected in series).

However, in actual practice, variation occurs in internal resistance and capacity for the unit cell and, therefore, fluctuation takes place in the voltages shared by the respective unit cells. As a result, deterioration proceeds from the unit cell whose shared voltage is high and it is conceivable that a life cycle of the stack type battery tends to be limited by the unit cell having such a high shared voltage.

To cope with such a phenomenon, it is required to construct to compel the voltages shared by respective unit cells to be controlled so as to allow all the unit cells to uniformly share the voltages. To this end, there is a need for preparing electrodes for measuring the voltages of the unit cells one by one.

Here, when studying the structure disclosed in Japanese Patent Application Laid-Open Publication No. 2001-250741, there is a big difference in electrode component material, charging and discharging mechanism and capacity between the capacitor and the battery and, so, it is hard to simply apply a technology of the capacitor to the battery.

More particularly, with the battery constructed of a plurality of unit cells, it is conceived that, since a distance between the electrodes for each unit cell is extremely short and a short distance results in between adjacent shared voltage measurement tab electrodes, there is a probability of occurrence of mutual contact or mutual conduct. Particularly, in case of the secondary battery, it is conceived that, since an electric power is continuously derived through chemical reaction and, if such a situation occurs by any chance, the battery tends to continuously provide the power output differing from short-circuiting of the capacitor, not only the short-circuited portion but also the battery as a whole are adversely affected.

In order to avoid this affect, although it is conceivable for one surface of the shared voltage measurement tab electrode to be laminated with a contact preventive insulation film, it is conceived that only the shared voltage measurement tab electrode portion becomes thick and there is a tendency of occurrence in degraded sealing property and space efficiency.

Further, in case where the shared voltage measurement tab electrodes are provided, when placing the voltage measurement socket or the unit cell controller onto the shared voltage measurement tab electrodes, it is conceivable that a distance between the tabs is two small with a resultant tendency in occurrence of a complicated wiring structure in the voltage measurement socket or the unit cell controller.

Therefore, the present invention has been completed upon studies by the present inventors set forth above and has an object to provide a stack type battery and its related method that are able to measure a voltage for each unit cell.

To achieve such an object, according to one aspect of the present invention, there is provided a stack type battery in accordance with claim 1.

Meanwhile, another aspect of the present invention is a method of manufacturing a stack type battery in accordance with claim 21.

Other and further features, advantages, and benefits of the present invention will become more apparent from the following description taken in conjunction with the following drawings.

### BRIEF DESCRIPTION OF THE DRAWINGS

Fig. 1 is a perspective view representing an external structure of a stack type bipolar battery of a first embodiment according to the present invention;
Fig. 2 is a side view of the stack type bipolar battery as viewed in a direction as shown by an arrow A in Fig. 1 of the embodiment;
Fig. 3 is a cross sectional view of the stack type bipolar battery taken on line X-X of Fig. 1 of the embodiment;
Fig. 4 is a cross sectional view illustrating a structure of each current collector of the embodiment;
Fig. 5 is a plan view illustrating structures of respective current collectors of the stack type bipolar battery shown in Fig. 3 of the embodiment;
Fig. 6 is a perspective view representing an external structure of a stack type bipolar battery of a second embodiment according to the present invention;
Fig. 7 is a side view of the stack type bipolar battery as viewed in a direction as shown by an arrow B in Fig. 6 of the embodiment;
Fig. 8 is a plan view illustrating structures of respective current collectors of the stack type bipolar battery shown in Fig. 6 of the embodiment; Fig. 9 is a perspective view representing an external structure of a stack type bipolar battery of a third embodiment according to the present invention; Fig. 10A is a side view of the stack type bipolar battery as viewed in a direction as shown by an arrow C in Fig. 9 of the embodiment;
Fig. 10B is a side view of the stack type bipolar battery as viewed in a direction as shown by an arrow D in Fig. 9 of the embodiment;
Fig. 11 is a plan view illustrating structures of respective current collectors of the stack type bipolar battery shown in Fig. 9 of the embodiment;
Fig. 12 is a perspective view representing an external structure of a stack type bipolar battery of a fourth embodiment according to the present invention;
Fig. 13 is a side view of a unit cell controller unit as viewed in a direction as shown by an arrow E in Fig. 12 of the embodiment;
Fig. 14 is a circuit diagram illustrating a current bypass circuit of the unit cell controller shown in Fig. 13 of the embodiment;
Fig. 15 is a circuit diagram incorporating the current bypass circuit in the unit cell controller unit of the embodiment;
Fig. 16 is a perspective view representing an external structure of a stack type bipolar battery of a fifth embodiment according to the present invention;
Fig. 17 is a side view of a unit cell controller unit as viewed in a direction as shown by an arrow F in Fig. 16 of the embodiment;
Fig. 18 is a perspective view representing an external structure of a stack type bipolar battery of a sixth embodiment according to the present invention;
Fig. 19A is a side view of one unit cell controller unit as viewed in a direction as shown by an arrow G in Fig. 18 of the embodiment;
Fig. 19B is a side view of another unit cell controller unit as viewed in a direction as shown by an arrow H in Fig. 18 of the embodiment;
Fig. 20 is a perspective view representing an external structure of a stack type bipolar battery of a seventh embodiment according to the present invention;
Fig. 21 is a cross sectional view of the stack type bipolar battery taken on line Y-Y of Fig. 20 of the embodiment;
Fig. 22 is a plan view illustrating structures of current collectors shown in Fig. 21 of the embodiment; and
Fig. 23 is a view illustrating a schematic structure of a vehicle of an eighth embodiment according to the present invention.

### DETAILED DESCRIPTION OF THE PREFERRED EMBODIMENTS

Hereinafter, a stack type battery and its related method of each embodiment according to the present invention are described with suitable reference to the attached drawings. Also, in the drawings, an axis D1, an axis D2 and an axis D3 form a rectangular coordinate system.

### (First Embodiment)

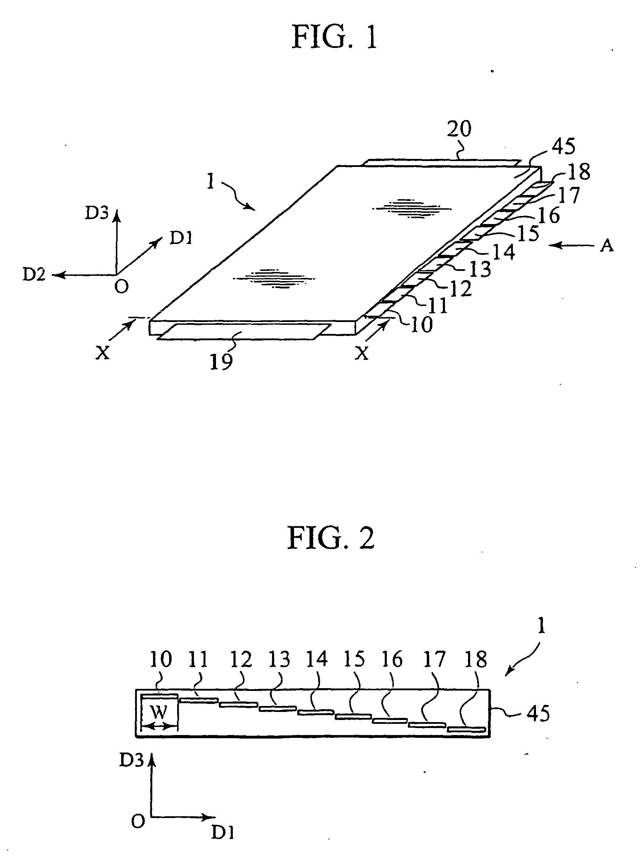

First, a stack type battery and its related method of a first embodiment according to the present invention are described in detail with reference to Figs. 1 to 5.

Fig. 1 is a perspective view showing an external structure of a sheet-like stack type bipolar battery (which may be simply referred to as a "stack type battery", "bipolar battery" or the like) of the first embodiment according to the present invention, and Fig. 2 is a side view of the battery as viewed in a direction as shown by an arrow A in Fig. 1.

As shown in Figs. 1 and 2, the stack type bipolar battery 1 is comprised of, though detail is described later, a plurality of unit cells that are connected in series and stacked in a direction parallel to the axis D3.

Then, connected to current collectors of respective unit cells that form the bipolar battery 1 are shared voltage measurement tab electrodes 10 to 18 to allow voltages of the unit cells to be measured, respectively. The shared voltage measurement tab electrodes 10 to 18 are so located to avoid at least adjacent tab electrodes from laying on the same horizontal position and, more particularly, the shared voltage measurement tab electrodes 10 to 18 are deviated (such that, in a case where the shared voltage measurement tab electrodes 10 to 18 are equal in size, the tab electrodes are equidistantly deviated from one another) on a side wall S of the bipolar battery 1 along a length thereof (in a direction parallel to the axis D1) so as to prevent the tab electrodes from overlapping one another in a stack direction (in a direction parallel to the axis D3) of respective unit cells of the bipolar battery 1. Typically, particularly with respect to the shared voltage measurement tab electrode 11, the tab electrode 11 is deviated from the shared voltage measurement tab electrode 10 by a width of approximately W in a direction D1. Also, the number of shared voltage measurement tab electrodes may be suitably determined depending upon the number of stacks of the unit cells.

Further, connected to the current collectors disposed at both ends of the bipolar battery 1 are main circuit tab electrodes 19 and 20 that extend outward of a battery case 45.

Fig. 3 is a schematic view illustrating an internal structure of the bipolar battery 1 in cross section taken on line X-X of Fig. 1.

As shown in Fig. 3, the bipolar battery 1 is comprised of a bipolar electrode 30, which is constructed of a positive electrode active material layer 32, a current collector 31 and a negative electrode active material layer 33 which are laminated in such an order, and a polymer solid electrolyte layer (which may be merely referred to as a "solid electrolyte layer" or the like) 40 interposed between the positive electrode active material layer 32 of one of a pair of the bipolar electrodes 30, 30 and the negative electrode active substantial layer 33 of the other one of the electrode pair. Fundamentally, each unit cell U is comprised of a pair of bipolar electrodes 30, 30 that are constructed of the current collector 31 and the positive electrode active material layer 32 of one of the bipolar electrode pair, the current collector 31 and the negative electrode active material layer 33 of the other one of the bipolar electrode pair, and the solid electrolyte layer 40 interposed between such a positive electrode active material layer 32 and the negative electrode active material layer 33.

That is, the bipolar battery 1 is so constructed as to include n-pieces of bipolar electrodes 30, which include n-pieces of current collectors 31; each of which has the shared voltage measurement tab electrode and is formed with the positive electrode active material layer 32 and the negative electrode active material layer 33, and (n + 1) pieces of the solid electrolyte layers 40 in such a manner that the n-pieces of bipolar electrodes 30 and the (n + 1) pieces of the solid electrolyte layers 40 are alternately laminated in stack. In addition, the current collectors 31, 31 are laminated on the outermost polymer solid electrolyte layers 40, 40, respectively, and, further, the shared voltage measurement tab electrodes are also formed on the current collectors 31, 31 laying at the outermost layers, respectively. Then, the outermost current collectors 31, 31 are connected to the associated main circuit tab electrodes 19 and 20, through which the current collectors 31, 31 are connected to an external circuit (not shown). Here, formed on the outermost current collector 31, to which the main circuit tab electrode 19 is connected, is only the negative electrode active material layer 33, and formed on the outermost current collector 31, to which the main circuit tab electrode 20 is connected, is only the positive electrode active material layer 32.

Further, the number n of pieces, that is, the number of stacks, of the bipolar electrodes 30 related to the number of stacks forming the unit cell U may be adjusted depending upon a desired voltage output. If an adequate output can be enhanced even in the presence of the sheet-like bipolar battery 1 with a thickness made extremely thinner, it may be possible to decrease the number of stacks of the bipolar electrodes related to the number of stacks forming the unit cell U. Also, in the figure, although n is selected to be typically 7, of course, the present invention is not limited to such a numeral.

Further, due to a need for the bipolar battery 1 to be prevented from encountering an impact from the outside and an environmental degradation during use of the bipolar battery 1, a stacked body of the sheet-like unit cells U is desired to be encompassed in a sheet-like battery case 45. The battery case 45 may preferably be formed of metal, such as aluminum, stainless steel, nickel and copper, and has an inner surface covered with an insulation member such as a polypropylene film.

Furthermore, the bipolar battery 1 is used in a lithium ion secondary battery that achieves charging and discharging through transfer of lithium ions. However, if it is possible to obtain advantageous effects such as improvement in battery characteristics, it is not objectionable for the bipolar battery to be applied to batteries of other kinds.

Hereinafter, a structure of the bipolar battery 1 is described.

### Bipolar Electrode

Fig. 4 is a cross sectional view illustrating a structure of one bipolar electrode in Fig. 3.

In Fig. 4, the bipolar electrode 30 has a structure wherein the positive electrode active material layer 32 is formed on one surface of the current collector 31 whose other surface is formed with the negative electrode active material layer 33, that is, a structure wherein the positive electrode active material layer 32, the current collector 31 and the negative electrode active material layer 33 are laminated in this order.

In contrast to such a bipolar electrode 30, a battery composed of general electrodes which is not the bipolar electrode is structured such that, in case of connecting the unit cells in series, positive electrode current collector and negative electrode current collector are electrically connected to one another via a connector portion (such as a wiring). With such a battery, connecting resistance is created in the connecting portion, tending to cause deterioration in power output. Also, in view of miniaturization of a battery module, a specific area, such as the connecting portion, provided with a component part with no direct association with an electric power generating capability results in inconvenience and, further, to that extent, there is a tendency of causing degradation of an energy density of the battery module as a whole.

On the contrary, with the bipolar electrode 30, since no connecting portion exists between the electrodes that are mutually connected in series, it is possible to minimize deterioration in the power output due to resistance of the connecting portion. Also, because of the absence of the connecting portion, miniaturization of the battery module can be achieved. Additionally, to the extent resulting from the absence of the connecting portion, it is possible to improve an energy density of the battery module as a whole.

The bipolar battery 1 may be comprised of a polymer solid electrolyte to be disposed on at least one of the positive electrode active material layer 32 and the negative electrode active material layer 33. Thus, by filling the polymer solid electrolyte in a spacing between the active materials of the active material layers, smooth ion transfer is achieved in the active material layer, resulting in an improvement of a power output of a bipolar battery as a whole.

### Current Collector

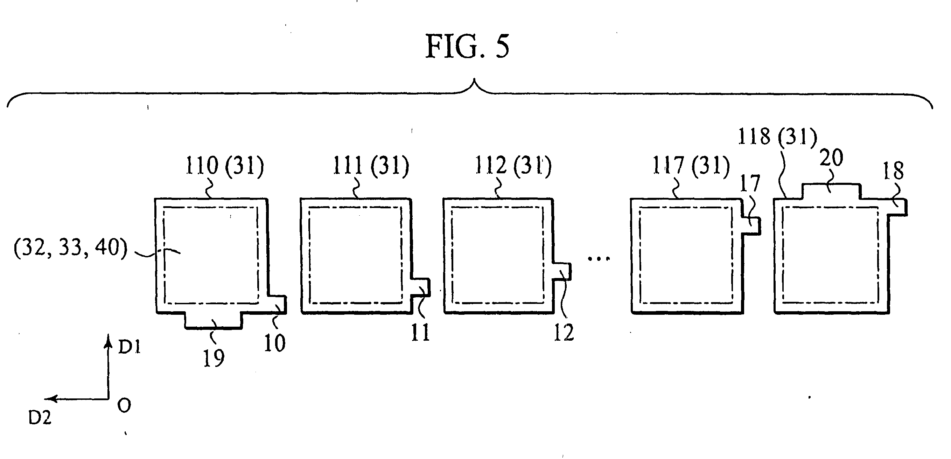

Fig. 5 is a plan view illustrating structures of current collectors 31 to be used for the bipolar electrode 30 of the bipolar battery 1 with the current collectors being shown as conveniently disposed in a juxtaposed relationship in order from the uppermost current collector 31 while reference numerals 110 to 118 are given to the current collectors 31 in a sequential order.

As shown in Fig. 5, the current collectors 31, that is, the current collectors 110 to 118 have shared voltage measurement tab electrodes 10 to 18 formed in different positions not to overlap with respect to one another as previously described above. In addition, the outermost current collectors 110 and 118 are formed with the main circuit tab electrodes 19 and 20, respectively, which oppositely extend in a direction different from those in which the shared voltage measurement tab electrodes 10 to 18 extend, that is, typically in orthogonal directions intersecting the directions along which the shared voltage measurement tab electrodes 10 to 18 extend. Also, the current collectors 113 to 116 having the shared voltage measurement tab electrodes 13 to 16 are structurally similar to the other remaining current collectors only except for positions in which the shared voltage measurement tab electrodes 13 to 16 are formed and, hence, the current collectors 113 to 116 are herein omitted.

Laminating the bipolar electrodes using such current collectors 110 to 118 allows, as shown in Figs. 1 and 2, the positions of the shared voltage measurement tab electrodes 10 to 18 to be deviated from one another along a length of the side surface of the bipolar battery 1 so as not to overlap with respect to one another.

Accordingly, even in the presence of the unit cell U with the thickness made thinner, no probability exists for the occurrence of the shared voltage measurement tab electrodes 10 to 18 being mutually brought into contact with respect to one another to result in short-circuited. Beside, due to the existence of the positional layout per se of the shared voltage measurement tab electrodes 10 to 18 in a manner as set forth above, these elements are avoided from being brought into mutual contact with one another and, so, there is no need for sticking insulation films, for non-contact purposes, onto one surfaces of the shared voltage measurement tab electrodes 10 to 18. This results in a capability of preventing the battery from being thickened.

### Positive Electrode Active Material Layer

The positive electrode active material layer 32 may include, in addition to positive electrode active material, polymer solid electrolyte. In addition to such elements, additives may include lithium salt or conductive promoting agent for increasing an ion conductivity.

As positive electrode material, use may be made of composite oxides which are composed of transition metals and lithium and are employed in a lithium ion battery of a solution type. In particular, these include Li-Co composite oxide such as LiCoO₂, Li-Ni composite oxide such as LiNiO₂, Li-Mn composite oxide such as spinel type LiMn₂O₄, and LI-Fe composite oxide such as LiFeO₂. In addition, these compounds may further include phosphate compounds such as LiFePO₄ composed of transition metals and lithium, sulfate compounds, transition metal oxides such as V₂O₅, MnO₂, TiS₂, MoS₂ and MoO₃, sulfides, PbO₂, AgO and NiOOH.

Positive electrode active material may preferably have a particle size less than a particle diameter of material that is generally used in the lithium ion battery of the solution type wherein the electrolyte is not solid, for the purpose of minimizing electrode resistance of the bipolar battery. In particular, an average particle diameter of positive electrode active material may fall in a range between 0.1 and 5 µm.

Polymer solid electrolyte to be contained may not be limited to particular polymer materials provided that polymer has an ion conductivity. Polymer that has the ion conductivity may include polyethylene oxide (PEO), polypropylene oxide (PPO) and copolymer of these materials. Such polyalkylene oxide polymer is able to dissolve lithium salts such as LiBF₄, LiPF₆, LiN(SO₂CF₃) ₂ and LiN(SO₂C₂F₅)₂. Also, formation of a bridge structure provides an excellent mechanical strength. Although such polymer solid electrolyte may be contained in at least one of the positive electrode active material layer and the negative electrode active material layer, in order for the bipolar battery to have a further improved battery characteristic, both the positive electrode active material layer and the negative electrode active material layer may preferably contain polymer solid electrolyte.

As lithium ion salts to be contained, compounds such as LiBF₄, LiPF₆, LiN(SO₂CF₃)₂ and LiN(SO₂C₂F₅)₂ or a mixture of these compounds may be employed. However, the present invention is not limited to these compounds.

The conductive promoter agent to be contained may include acetylene black, carbon black and graphite. However, the present invention is not limited to these compounds.

Further, a proportion of positive electrode active material, polymer solid electrolyte, lithium salt and conductive promoter agent is determined on consideration of application purposes (with a serious consideration in power output and energy). The proportion of polymer solid electrolyte to be contained in the active material layer becomes too small, deterioration results in a battery performance. In contrast, the proportion of polymer solid electrolyte in the active material layer becomes too large, deterioration also occurs in an energy density of the battery. Accordingly, in consideration of these factors, the amount of polymer solid electrolyte is appropriately determined so as to comply with intended purposes.

Further, in order to manufacture a bipolar battery, aimed to have high priority in a battery reacting property, using polymer solid electrolyte (with ion conductivity: 10⁻⁵ to 10⁻⁴ S/cm), electronic conduction resistance between active material particles is preferably maintained at a low level by increasing the amount of the conductive promoter agent or decreasing an apparent density of active material. At the same time, it is preferable for spaces to be increased to allow polymer solid electrolyte to be filled in these spaces for thereby increasing the proportion of polymer solid electrolyte to be contained.

Further, a thickness of the positive electrode active material layer is not particularly limited and, as previously described with reference to the proportion, should be determined in consideration of the application purposes (with the consideration in power output and in energy) and the ion conductivity. Typically, the thickness of the positive electrode active material layer may fall in a range of approximately 10 to 500 µm.

### Negative Electrode Active material Layer

The negative electrode active material layer 33 may include, in addition to negative electrode active material, polymer solid electrolyte. In addition to these compounds, lithium ion salts and conductive promoter agent may also be included for increasing the ion conductivity. The elements other than the kind of negative electrode active material are fundamentally similar in content with those described in connection with positive electrode active material.

As negative electrode active material, although it is possible to employ negative electrode active materials that are employed in the lithium ion battery of the solution type, when in consideration of a reacting property of polymer solid electrolyte to be particularly included, metal oxides or composite oxide composed of metals and lithium may be preferred. More preferably, negative electrode active material may include transition metal oxides or composite oxides composed of transition metals and lithium. More preferably, negative electrode active material may include titan oxide or composite oxide composed of titan and lithium.

Further, as negative electrode active material, in addition to the above compounds, carbon may also be preferably employed. When employing carbon as negative electrode active material, introduction of lithium ion provides a capability of obtaining a high voltage battery identical to that including negative electrode active material composed of lithium. Carbon to be employed may preferably include hard carbon. Since hard carbon causes the bipolar battery to have a larger voltage fluctuation, in terms of fluctuation in a charged state, than that employing graphite, the voltage fluctuation allows the charged state to be predicted. Accordingly; it is needless to provide effort or a device for such a purpose of calculating the charged state from an electric variable, and charging control of the unit cell and a device for the same can be achieved in a simplified structure.

### Polymer Solid Electrolyte Layer

The polymer solid electrolyte layer 40 is made of a layer that is constructed of polymer having an ion conductivity and no limitation is intended to particular material provided that it exhibits the ion conductivity.

As polymer solid electrolyte, polymer solid electrolyte such as polyethylene oxide (PEO), polypropylene oxide (PPO) and copolymer of these compounds may be included.

Further, lithium salts may be contained in the polymer solid electrolyte layer 40 in order to enhance the ion conductivity. Lithium salts may include LiBF₄, LiPF₆, LiN(SO₂CF₃)₂, LiN(SO₂C₂F₅)₂ or a mixture of these compounds. However, lithium salts are not limited to these compounds. Polyalkylene oxide polymer is able to dissolve lithium salts such as LiBF₄, LIPF₆, LiN(SO₂CF₃)₂ and LiN(SO₂C₂F₅)₂. Also, formation of a bridge structure provides an excellent mechanical strength.

Although polymer solid electrolyte may be possibly contained in the polymer solid electrolyte layer, the positive electrode active material layer and the negative electrode active material layer, identical polymer solid electrolyte may be employed, and polymer solid electrolyte different for each layer may be used.

The thickness of the polymer solid electrolyte layer 40 is not particularly limited. However, in order to obtain a compact bipolar battery 1, it is preferable for the polymer solid electrolyte layer 40 to have an extremely thin thickness to the extent for ensuring a function of the electrolyte layer. Typically, the polymer solid electrolyte layer has a thickness of approximately 5 to 200 µm.

By the way, polymer for polymer solid electrolyte to be currently and preferably used is polymer such as PEO and PPO. Therefore, polymer solid electrolyte closer to the positive electrode has a less oxidation resistance tendency under a high temperature condition. Consequently, polymer of this type is generally used in the lithium ion battery of the solution type. When employing positive electrode agent having a high oxidation-reduction potential, it is preferable for a capacity of the negative electrode to be preferably lower than that of the positive electrode that opposes to the negative electrode via the polymer solid electrolyte layer. Thus, if the capacity of the negative electrode is less than that of the opposing positive electrode, a positive electrode potential can be prevented from excessively increasing at a late stage of charging. Here, "the positive electrode opposes via the polymer solid electrolyte layer" designates a positive electrode that forms a component element of an identical unit cell.

The capacities of such positive electrode and the negative electrode can be derived as theoretical capacities when manufacturing the positive electrode and the negative electrode based on a manufacturing condition. It may be of course for a capacity of a finished product to be directly measured by a measurement device. However, if the capacity of the negative electrode is less than that of the opposing positive electrode, since the negative electrode potential becomes excessively low and the battery tends to have a deteriorated durability, there is a need for taking care of a charging and discharging voltage. Particularly, care is taken not to cause deterioration in the durability by determining an average charging voltage of one unit cell so as to lie in a proper value in terms of the oxidation-reduction potential of positive electrode active material to be used.

Further, the solid polymer electrolyte layer 40 may also include polymer gel electrolyte. Polymer gel electrolyte may be solid polymer electrolyte that has ion conductivity and contains electrolyte solution that is used in the lithium ion secondary battery or may further include a polymer, with no ion conductivity, in which similar electrolyte solution is retained in a skeletal structure of the polymer.

Such electrolyte solution (including electrolyte salts and plasticizer) is not particularly limited, and a variety of electrolyte solutions may be suitably used. These include at least one kind of lithium salt (as electrolyte salt) selected from inorganic acid anion salts, such as LiPF₆, LiBF₄, LiClO₄, LiAsF₆, LiTaF₆, LiAlCl₄ and Li₂B₁₀Cl₁₀, arid organic acid anion salts, such as LiCF₃SO₃, Li(CF₃SO₂)₂N and Li(C₂F₅SO₂)₂N, and plasticizer (composed of organic solvent) such as aprotic solvent mixed with at least one kind or more than two kinds of compounds selected from cyclic carbonates such as propylene carbonate and ethylene carbonate, chain carbonates such as dimethyl carbonate, methyl ether carbonate and diethyl carbonate, ethers such as tetrahydrofuran, 2-methyl tetrahydrofuran, 1,4-dioxane, 1,2-dimethoxiethane and 1,2-dibuthoxiethane, lactones such as γ-butytyrolactone, nitriles such as acetonitrile, esters such as propionic acid methyl, amides such as dimethylformaldehyde, methyl acetate and methyl formate.

Moreover, solid polymer electrolyte having an ion conductivity may include polyethylene oxide (PEO), polypropylene oxide (PPO) and copolymer of these compounds.

Furthermore, as polymer with no lithium ion conductivity for use in polymer gel electrolyte, polyvinylidene fluoride (PVDF), polyvinylchloride (PVC), polyacrilonitrile (PAN) and polymethylmethacrylate (PMMA) may be used. Also, though PAN and PMMA belong to a family with almost no ion conductivity and solid polymer electrolyte having the ion conductivity mentioned above may be used, these salts may be used in polymer gel electrolyte.

As set forth above, with the bipolar battery 1 of the presently filed embodiment, since the current collectors of the respective unit cells have the shared voltage measurement tab electrodes 10 to 18 that are formed in the positions deviated along the length of the side of the bipolar battery 1 to be prevented from mutually overlapping under a laminated condition, the shared voltages of the respective unit cells can be easily measured.

Also, since the shared voltage measurement tab electrodes 10 to 18 are disposed and laminated in a way to be deviated in the longitudinal direction of the side surface of the bipolar battery 1 so as not to overlap each other at the same position, even if the thickness of the unit cell is made thinner, it is possible to avoid occurrence of mutual contact between the shared voltage measurement tab electrodes to cause short-circuiting. Also, this results in no need for one surface of the shared voltage measurement tab electrode to be covered with insulation coating, thereby enabling the thickness of the unit cell to be made thinner.

Further, since the shared voltage measurement tab electrodes 11 to 17 are juxtaposed in an equal interval along the length of the side surface of the bipolar battery 1, a structure of a voltage measurement socket that is connected to the shared voltage measurement tab electrodes 11 to 17 is simplified, providing an ease of manufacturing.

In addition, since the bipolar battery 1 of the presently filed embodiment employs electrolyte composed of polymer solid electrolyte, leakage of liquid between the adjacent cells can be prevented without providing specific members. Also, the active material layer internally contains polymer solid electrolyte, the active material layer has an excellent ion conductivity to allow the bipolar battery to have a high battery characteristic.

Moreover, when using hard carbon for negative active material of the bipolar battery 1, charging control of the unit cell can be simply achieved only upon measurement of the voltage and, thus, a stack type battery with a simplified structure and high power output can be obtained.

### (Second Embodiment)

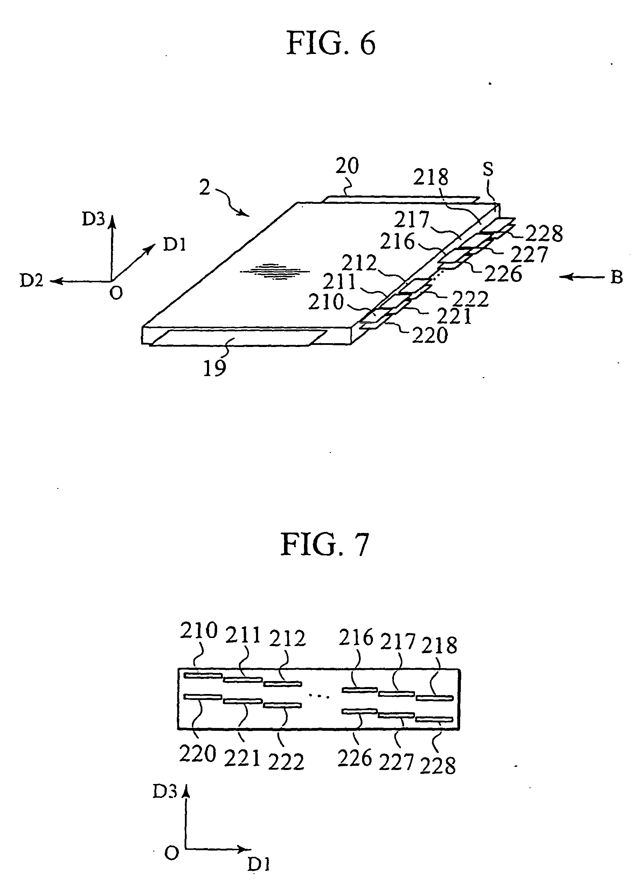

Next, stack type battery and its related method of a second embodiment according to the present invention are described in detail with reference to Figs. 6 to 8.

Fig. 6 is a perspective view showing an external structure of a stack type bipolar battery of the second embodiment according to the present invention, and Fig. 7 is a side view of the bipolar battery as viewed in a direction as shown by an arrow B in Fig. 6.

As shown in Figs. 6 and 7, the stack type bipolar battery 2 of the presently filed embodiment differs from the first embodiment, in that current collectors of the bipolar battery 2 are formed with two rows of shared voltage measurement tab electrodes 210 to 218 and 220 to 228 at equidistantly deviated positions along a length of a side surface S of the bipolar battery 2 in a non-overlapping relationship with respect to one another under a stacked condition, and has the same structure in other respect as that of the first embodiment. So, the presently filed embodiment is described aiming at such a differing point while similar points are suitably omitted or simplified in description.

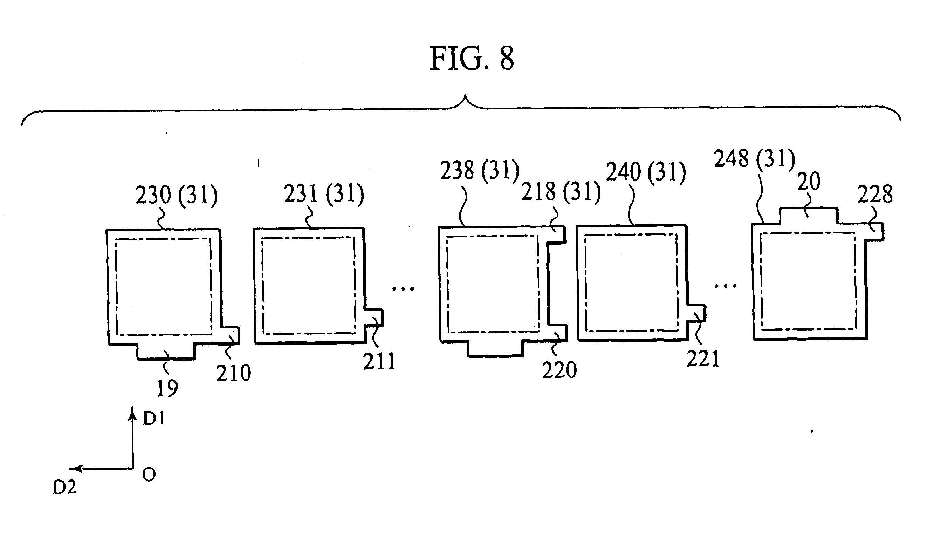

Fig. 8 is a plan view illustrating structures of respective current collectors like those shown in Fig. 5.

As shown in Fig. 8, in the presently filed embodiment, fundamentally similar to the first embodiment, current collectors 230 to 238 and 240 to 248 are also formed with shared voltage measurement tab electrodes 210 to 218 and 220 to 228 in different positions, respectively. Also, the current collector 230 and the current collector 248 are formed with main circuit tab electrodes 19 and 20, respectively, which extend in a direction typically perpendicular to the direction in which the shared voltage measurement tab electrodes extend.

More particularly, the current collector 238 laying just in a midway of the unit cells that are stacked, that is, the current collector 238 having one end formed with the shared voltage measurement tab electrode 218 has the opposing end formed with shared voltage measurement tab electrode 220. Thus, even when the shared voltage measurement tab electrodes are formed in the two rows, a distance (a distance between a pair of electrodes for measuring the voltage) between the shared voltage measurement tab electrodes, that is, the distances associated with all the shared voltage measurement tab electrodes, such as the distances between the shared voltage measurement tab electrodes 217 and 218 and between the shared voltage measurement tab electrodes 220 and 221 can be held constant. Consequently, it is possible to simplify a structure of a voltage measurement socket associated with the shared voltage measurement tab electrodes 210 to 218 and 220 to 228.

Also, in the figure, since midway-course shared voltage measurement tab electrodes and current collectors are different from the other associated component elements set forth above only in respective positions of the shared voltage measurement tab electrodes and are similar in structure to these component elements, illustration of the same is omitted.

As set forth above, with the bipolar battery 2 of the presently filed embodiment, since the two rows of the shared voltage measurement tab electrodes, which are placed at equal intervals along the length of the battery side surface so as not to mutually overlap one another under the laminated condition, are disposed on the same side surface of the battery, even in the presence of a larger number of stacks of the unit cells, it becomes possible for the shared voltage measurement tab electrodes of mutually adjacent unit cells to be reliably protected from being brought into contact to be short-circuited.

Further, among the shared voltage measurement tab electrodes disposed in the two rows, due to the existence of the shared voltage measurement tab electrodes formed at both ends of the current collector intermediate the stack, the distance between the shared voltage measurement tab electrodes is held constant at all times and, therefore, the voltage measurement socket can be simplified in construction.

### (Third Embodiment)

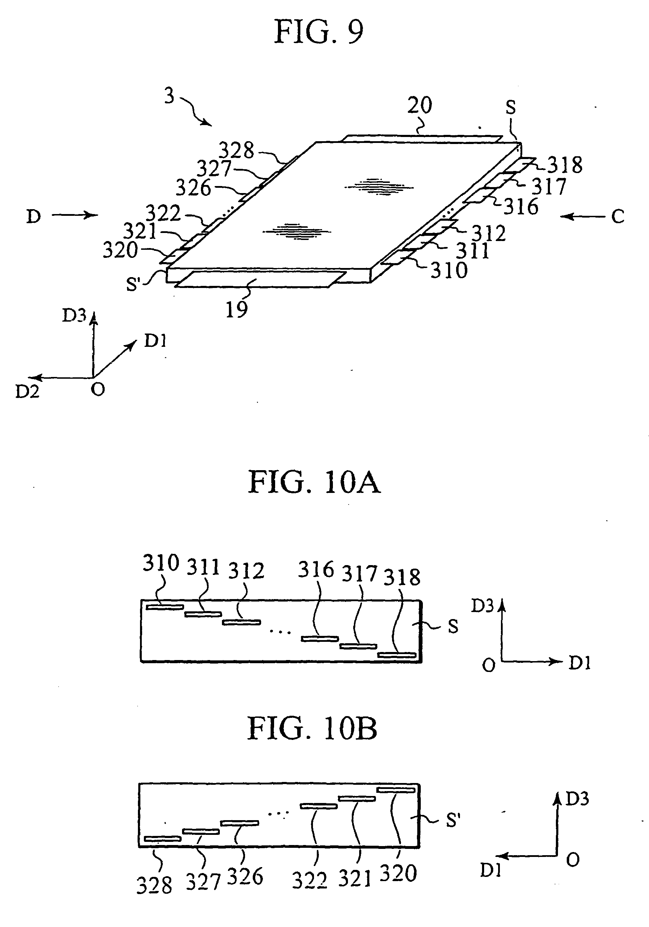

Next, a stack type battery and its related method of a third embodiment according to the present invention are described in detail with reference to Figs. 9 to 11.

Fig. 9 is a perspective view showing an external structure of a stack type bipolar battery of the third embodiment according to the present invention, Fig. 10A is a side view of the battery as viewed in a direction as shown by an arrow C in Fig. 9 and Fig. 10B is a side view of the battery as viewed in a direction as shown by an arrow D in Fig. 9

As shown in Figs. 9 to 10B, the bipolar battery 3 of the presently filed embodiment differs from the first embodiment, in that the current collectors of the respective unit cells are formed with shared voltage measurement tab electrodes 310 to 318 and 320 to 328, respectively, on opposing side surfaces S, S' of the bipolar battery 3 to be equidistantly deviated along a length of each of the side surfaces S, S' of the bipolar battery 3 in a non-overlapping relationship with respect to one another under a stacked condition, and has the same structure in other respect as that of the first embodiment. So, the presently filed embodiment is described aiming at such a differing point while similar points are suitably omitted or simplified in description.

In particular, the shared voltage measurement tab electrodes 310 to 318 and 320 to 328, formed on both opposing side surfaces S, S' of the bipolar battery 3, are disposed in a way to alternately protrude rightward and leftward in order in which the unit cells are stacked. That is, in order from the above under a condition shown in the figure, the shared voltage measurement tab electrode 310 formed on a first current collector protrudes rightward, the shared voltage measurement tab electrode 320 formed on a second current collector protrudes leftward, the shared voltage measurement tab electrode 311 formed on a third current collector protrudes rightward and, from this on, the shared voltage measurement tab electrodes similarly and alternately protrude leftward and rightward in order.

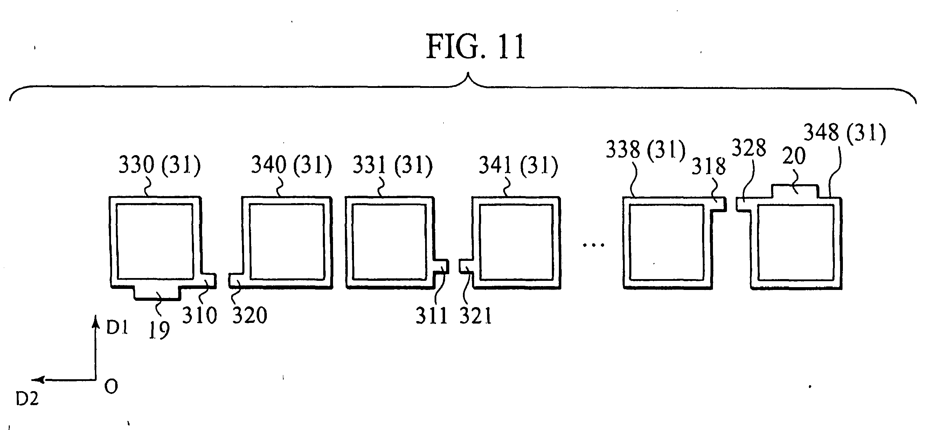

Fig. 11 is a plan view illustrating structures of respective current collectors like in Fig. 5.

As shown in Fig. 11, with the presently filed embodiment, also, fundamentally like in the first embodiment, current collectors 330 to 338 and 340 to 348 are formed with the shared voltage measurement tab electrodes 310 to 318 and 320 to 328 at different positions.

More particularly, in order to allow the shared voltage measurement tab electrodes 310 to 318 and 320 to 328 to alternately protrude rightward and leftward in order in which the unit cells are stacked, the shared voltage measurement tab electrode 310 protrudes from a first current collector 330 rightward in the figure, the shared voltage measurement tab electrode 320 protrudes from a second current collector 341 leftward in the figure, the shared voltage measurement tab electrode 311 protrudes from a third current collector 331 rightward in the figure and, from this on, the shared voltage measurement tab electrodes similarly and alternately protrude leftward and rightward in sequence, with the last current collector 348 being formed with a shared voltage measurement tab electrode 328 that protrudes leftward in the figure. Also, main circuit tab electrodes 19 and 20 are correspondingly formed on the first current collector 330 and the last current collector 348, respectively, in directions different from the direction in which the shared voltage measurement tab electrodes extend.

Also, in the figure, since midway-course shared voltage measurement tab electrodes and current collectors are different from the other associated component elements set forth above only in respective positions of the shared voltage measurement tab electrodes and are similar in structure to these component elements, illustration of the same is omitted.

As set forth above, with the bipolar battery 3 of the presently filed embodiment, since the shared voltage measurement tab electrodes, which are equidistantly deviated along the length of the battery side surface in a non-overlapping relationship under the laminated condition, are disposed on the both side surfaces of the battery, even in the presence of a larger number of stacks of the unit cells, it becomes possible for the shared voltage measurement tab electrodes of mutually adjacent unit cells to be reliably protected from being brought into contact to be short-circuited. Especially, since the shared voltage measurement tab electrodes extends from the adjacent current collectors are configured to protrude at the both battery sides mutually opposed to one another, it becomes possible for the shared voltage measurement tab electrodes of mutually adjacent current collectors to be reliably protected from being short-circuited.

### (Fourth Embodiment)

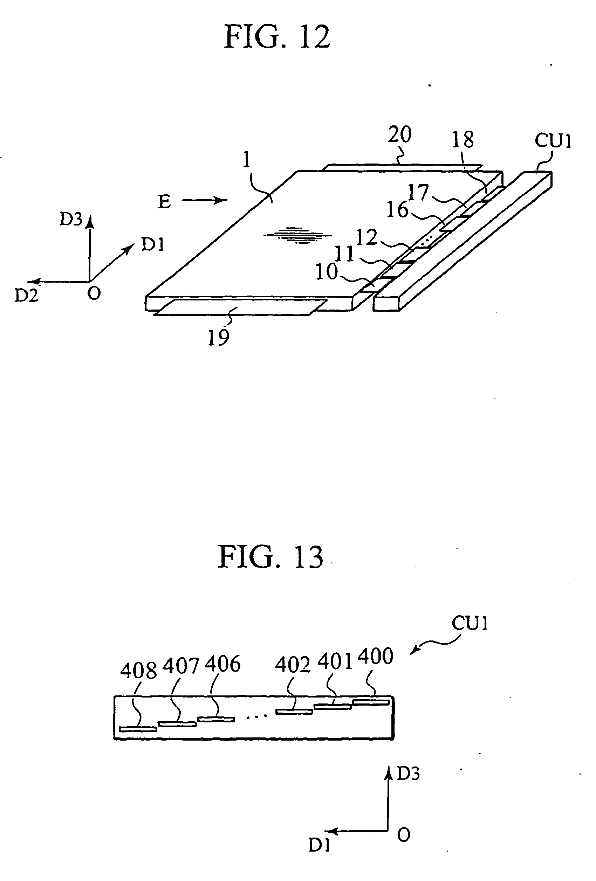

Next, a stack type battery and its related method of a fourth embodiment according to the present invention are described in detail with reference to Figs. 12 to 15.

Fig. 12 is a perspective view showing an external structure of a stack type bipolar battery of the presently filed embodiment, and Fig. 13 is a side view of a unit cell controller unit as viewed in a direction as shown by an arrow E in Fig. 12.

As shown in Figs. 12 and 13, in the presently filed embodiment, the bipolar battery 1 of the first embodiment is provided with a unit cell controller unit CU1 for controlling the unit cells.

An shown in Fig. 13, the unit cell controller unit CU1 has a unitary structure formed with a socket provided with shared voltage tab connection electrodes 400 to 408 in compliance with the shared voltage measurement tab electrodes 10 to 18 disposed in the bipolar battery 1. The shared voltage tab connection electrodes 400 to 408 are correspondingly connected with the shared voltage measurement tab electrodes 10 to 18.

The unit cell controller unit CU1 is typically located between the respective positive electrodes and the respective negative electrodes of the plural unit cells and has a current bypass circuit that, when a voltage of the unit cell exceeds a prescribed value, the positive electrode and the negative electrode are connected to allow current to bypass electrolyte intervening between the positive electrode and the negative electrode.

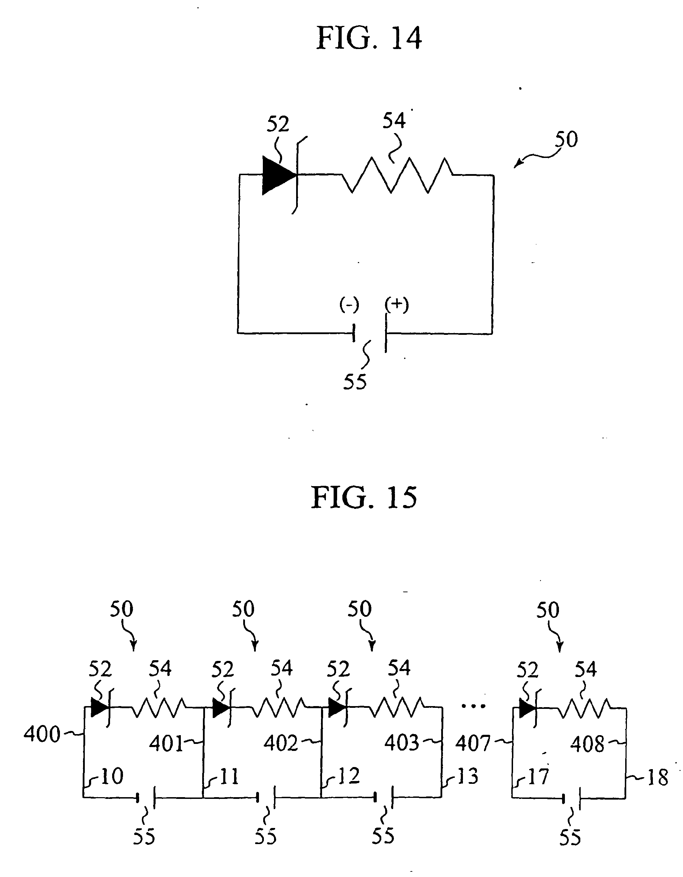

Fig. 14 is a circuit diagram illustrating a structure of a current bypass circuit.

As shown in Fig. 14, the current bypass circuit 50 includes a circuit wherein a Zener diode 52 and a resistor 54 are connected in series between the positive electrode (+) and the negative electrode (-) of a unit cell 55. If the Zener voltage of the Zener diode 52 is exceeded, the current bypass circuit 50 bypasses current without passing through electrolyte during charging.

Fig. 15 is a circuit diagram illustrating a structure in which such a current bypass circuit 50 is connected in the unit cell controller unit CU1.

As shown in Fig. 15, the current bypass circuits 50, each composed of one set of Zener diode 52 and the resistor 54, are connected between the shared voltage connection tab electrodes 400 and 401, 401 and 402, and the like, respectively. Also, since the number of shared voltage tab connection electrodes is illustrative only and circuit structures between the shared voltage tab connection electrodes 403 to 407 are similar to those described above, illustration of those circuit structures is omitted.

With such a structure, due to the presence of the unit cell controller unit CU1 connected to the bipolar battery 1, the current bypass circuits 50 are connected in parallel to the respective unit cells of the bipolar battery 1.

First, during charging of the bipolar battery 1, the Zener diode 52 is connected to the unit cell 55 in a direction to block conduction of the Zener diode 52 with respect to a direction in which current is applied to the unit cell 55, at an initial stage in which charging is started, since a charging voltage of the unit cell 55 forming the bipolar battery 1 does not reach the Zener voltage (a voltage at which Zener diode 52 of the current bypass circuit 50 conducts), almost no current flows through the current bypass circuit 50.

As charging proceeds, a voltage across terminals of the unit cells increases and if such a voltage exceeds the Zener voltage, the Zener diode 52 of the current bypass circuit 50 conducts to bypass current flowing through the unit cell 55. When using the Zener diode 52 whose Zener voltage is 4.0 volts, charging of the unit cell 55 is terminated at a timing at which the voltage across the terminals falls in 4.0 volts. The unit cell 55 whose voltage across the terminals reaches the charging voltage automatically terminates its charging mode and, at a timing at which all the current bypass circuits 50 bypass the unit cells 55, charging of the bipolar battery 1 is terminated.

Also, under a condition in which all the unit cells 55 are bypassed, electric current flows through the current bypass circuits 50 that are connected in series from a battery charger, with electric current being limited by the resistors 54 connected to the Zener diodes 52 in series. Consequently, the resistors 54 have functions to suppress an increase in electric current such that, when electric current bypasses the current bypass circuits 50, excessive electric current does not flow through the current bypass circuits 50. A resistance of the resistor 54 is selected to a value to preclude excessively large electric current to flow through the current bypass circuit 50.

As set forth the above, with the bipolar battery 1 of the presently filed embodiment, due to the presence of the unit cell controller unit CU1 that is formed in the unitary structure with the socket, which is provided with the shared voltage tab connection terminals 400 to 408 associated with the shared voltage measurement tab electrodes 10 to 18 provided in the bipolar battery 1, and is connected to the bipolar battery 1, the charging voltages of the respective unit cells of the bipolar battery 1 can be easily controlled.

Further, since provision of the current bypass circuits 50 in the unit cell controller unit CU1 enables the current bypass circuit to be activated to terminate the charging phase when the charging voltage of the unit cell exceeds the prescribed value, it is possible to prepare a uniform and optimum chargeable environment even in the existence of non-uniformity in the battery characteristic such as the battery capacity and internal resistance. For this reason, no biased charged condition occurs in each unit cell and uniform charging can be achieved, resulting in a battery with an improved life cycle and improved reliability. Thus, installing the current bypass circuit aimed at protecting overcharging of the unit cell enables charging states of the respective unit cells to be uniformed at a full charging state, thereby enabling some of the unit cells from encountering the overcharged states due to unbalance in the charged states.

Also, with the presently filed embodiment, although the current bypass circuit 50 is comprised of the circuit wherein the Zener diode 52 and the resistor 54 are connected in series, the current bypass circuit 50 may include only the Zener diode. However, charging current of the bipolar lithium ion secondary battery increases when the current bypass circuit 50 bypasses electric current, it may be preferred for the current bypass circuit 50 to have the resistor 54 to suppress increase in the electric current to some extent so as to protect excessive current from flowing through the current bypass circuit 50.

### (Fifth Embodiment)

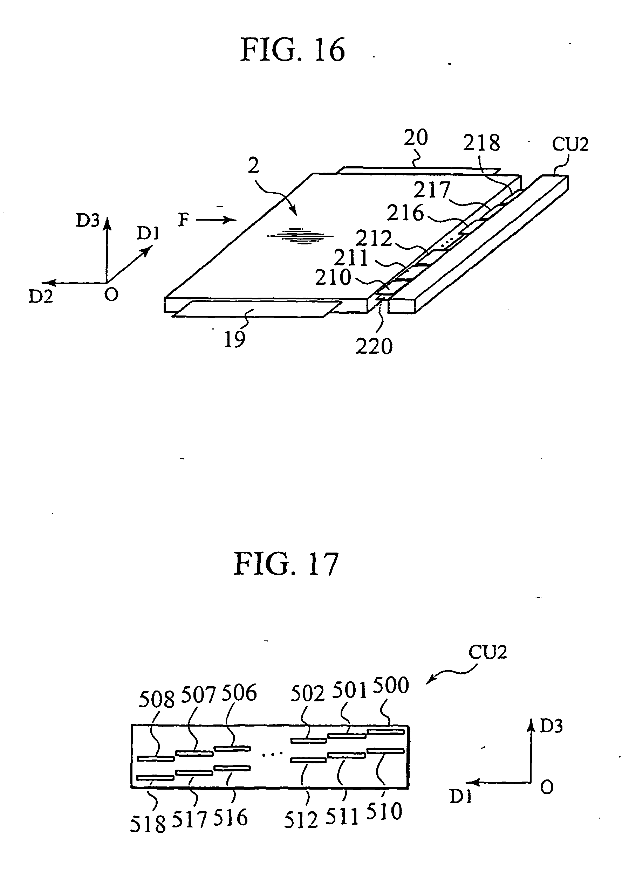

Next, a stack type battery and its related method of a fifth embodiment according to the present invention are described in detail with reference to Figs. 16 and 17.

Fig. 16 is a perspective view showing an external structure of a stack type bipolar battery of the presently filed embodiment, and Fig. 17 is a side view of a unit cell controller unit as viewed in a direction as shown by an arrow F in Fig. 16.

As shown in Fig. 16, in the presently filed embodiment, the bipolar battery 2 of the second embodiment is provided with a unit cell controller unit CU2 for controlling the unit cells.

More particularly, as shown in Fig. 17, like the unit cell controller unit of the fourth embodiment wherein the socket is formed in the unitary structure, the unit cell controller unit CU2 has two rows of shared voltage tab connection electrodes 500 to 508 and 510 to 518 in compliance with the shared voltage measurement tab electrodes 210 to 218 and 220 to 228 of the bipolar battery 2. The shared voltage tab connection electrodes 500 to 508 and 510 to 518 are correspondingly connected with the shared voltage measurement tab electrodes 210 to 218 and 220 to 228. Also, though illustration is omitted, like in the fourth embodiment described above, a current bypass circuit composed of Zener diode and resistance are internally incorporated in the unit cell controller unit CU2.

With the bipolar battery 2 of the presently filed embodiment as set forth above, also, the charging voltages of the respective unit cells can be simply and reliably controlled like in the fourth embodiment that has been described above in conjunction with the bipolar battery 1.

### (Sixth Embodiment)

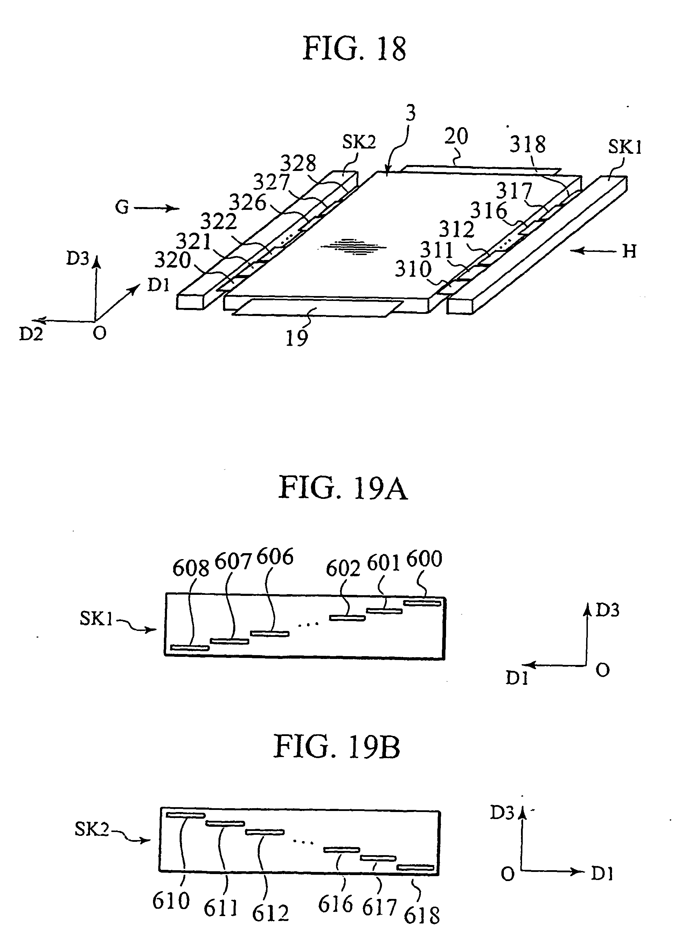

Next, a stack type battery and its related method of a sixth embodiment according to the present invention are described in detail with reference to Figs. 18 to 19B.

Fig. 18 is a perspective view showing an external structure of a stack type bipolar battery of the presently filed embodiment, Fig. 19A is a side view of one of unit cell controller unit sockets as viewed in a direction as shown by an arrow G in Fig. 18, and Fig. 19B is a side view of the other one of the socket of the unit cell controller unit sockets as viewed in a direction as shown by an arrow H in Fig. 18.

As shown in Fig. 18, the presently filed embodiment has a structure wherein shared voltage tab connection sockets SK1 and SK2 to be connected to in correspondence with the unit cell controllers for controlling the unit cells are connected to the bipolar battery 3 of the third embodiment. Here, in view of the presence of the shared voltage tab connection electrodes located at both side surfaces of the bipolar battery 3, the shared voltage tab connection sockets are not formed in a unitary structure with associated unit cell controllers (not shown). Of course, if a capability of production exists from the point of a size, it is not objectionable for a unitary structure to be used as in the fourth and fifth embodiments.

More particularly, as shown in Figs. 19A and 19B, the shared voltage tab connection sockets SK1 and SK2 have shared voltage tab connection electrodes 600 to 608 and 610 to 618, respectively, formed in association with shared voltage measurement tab electrodes 310 to 318 and 320 to 328 of the bipolar battery 3. Then, in order to allow the associated ones of the shared voltage measurement tab electrodes to form one set, for each unit cell, such as a set of shared voltage measurement tab electrodes 310 and 320, a set of shared voltage measurement tab electrodes 311 and 321 and the like, collected wires are directed toward the unit cell controllers, respectively. That is, connecting the shared voltage tab connection electrodes 600 and 610 so as to allow the shared voltage measurement tab electrodes 310 and 320 to enable measurement of the voltage of one unit cell, connecting the shared voltage tab connection electrodes 601 and 611 so as to allow the shared voltage measurement tab electrodes 311 and 321 to enable measurement of the voltage of another one unit cell and also connecting the shared voltage tab connection electrodes of residual unit cells in a similar manner permit the collected wires to be directed toward the unit cell controllers. Wirings collected from the shared voltage tab connection electrodes are connected to the unit cell controllers which are not shown, and the voltage for each unit cell is measured whereupon control is achieved to allow the respective unit cells to be charged at the same charged rate.

Even with the bipolar battery 3 of the presently filed embodiment as set forth above, the charging voltage of the respective unit cells can be simply and reliably controlled like in the fourth embodiment described in connection with the bipolar battery 1.

### (Seventh Embodiment)

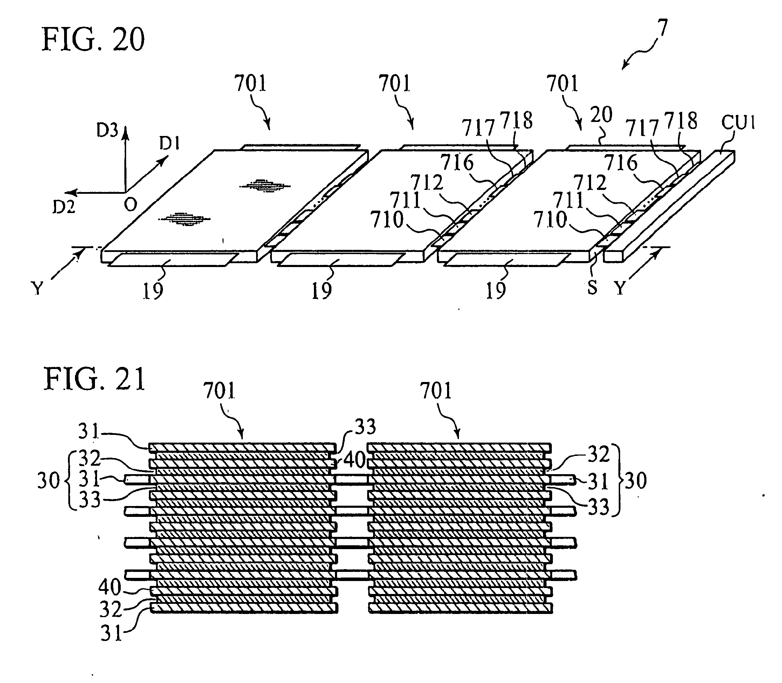

Next, a stack type battery and its related method of a seventh embodiment according to the present invention are described in detail with reference to Figs. 20 to 22.

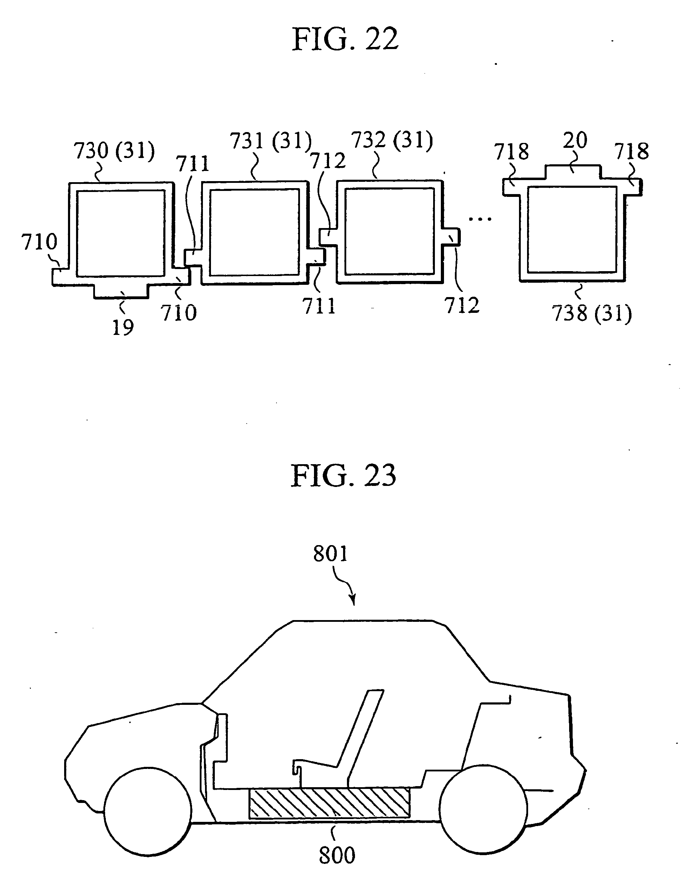

Fig. 20 is a perspective view showing an external structure of a stack type bipolar battery of the presently filed embodiment, Fig. 21 is a cross sectional view of the stack type bipolar battery taken along line Y-Y of Fig. 20, and Fig. 22 is a plan view illustrating structures of respective current collectors.

As shown in Fig. 20, a bipolar battery 7 of the presently filed embodiment has a structure in which a plurality of cell units provided with shared voltage measurement tab electrodes are connected in parallel through shared voltage measurement tab electrodes.

More particularly, the bipolar battery 7 is comprised of plural pieces of bipolar battery units 701 each having the same structure as that of the bipolar battery 1 of the first embodiment, with the bipolar battery units 701 being connected in parallel through respective shared voltage measurement tab electrodes 710 to 718 for each unit cell. As a consequence, the bipolar battery 7 has an internal structure which, as typically shown as two bipolar battery units 701, 701 in Fig. 21, takes the form of a condition where bipolar electrodes 30 of one bipolar battery unit 701 are connected to associated bipolar electrodes 30 of another bipolar battery unit 701, respectively. The bipolar battery unit 701 has an internal structure, similar to that of the first embodiment described above with reference to Fig. 3, wherein n-pieces of bipolar electrodes 30, each of which includes a current collector 31 laminated with a positive electrode active material layer 32 and a negative electrode active material layer 33, and (n+1) pieces of polymer solid electrolyte layer 40 are alternately laminated, with the outermost polymer solid electrolyte layers 40 including current collectors 31, 31 on which associated active material layers 32, 33 are laminated, respectively.

Further, the bipolar battery unit 701, located at one end of the bipolar battery 7, has shared voltage measurement tab electrodes 710 to 718, which are not connected to the adjacent bipolar battery unit 701 and to which the unit cell controller unit CU1 is connected. Also, the unit cell controller unit CU1 is similar in structure to that of the fourth embodiment that has been described above.

Furthermore, the current collectors used in each bipolar battery unit 701 are so configured that, as typically shown as one bipolar battery unit 701 in Fig.22, the current collectors are formed on both sides thereof with oppositely outwardly extending shared voltage measurement tab electrodes 710 to 718 at positions deviated from one another along both sides of the current collectors 730 to 738 that are stacked in place. Consequently, like in the bipolar battery 1 of the first embodiment (see Fig. 2), the shared voltage measurement tab electrodes 710 to 718 are deviated from one another along a length of the side surface S of the bipolar battery unit 701 and equidistantly positioned in a non-overlapping relationship under a stacked condition. Also, illustration of the shared voltage measurement tab electrodes on the other side surface of the leftmost end in Fig. 20 is omitted.

As set forth above, with the presently filed embodiment, due to the presence of the battery units each of which is provided with the shared voltage measurement tab electrodes and which are connected in parallel through the plural pieces of the shared voltage measurement tab electrodes, even if deterioration occurs in any of the unit cells among the bipolar battery units 701 and infinity internal resistance results in, electric current is allowed to flow through the unit cell of another bipolar battery unit 701 connected to the failed unit cell in parallel through the shared voltage measurement tab electrodes. For this reason, even in the presence of any deteriorated unit cell among the bipolar battery units 701, the battery 7 can be continuously used without causing any rapid degradation in performance.

### (Eighth Embodiment)

Next, a stack type battery and its related method of an eighth embodiment according to the present invention are described in detail with reference to Fig. 23.

As shown in Fig. 23, a vehicle of the presently filed embodiment incorporates the bipolar batteries of the first to seventh embodiments and, more preferably, the bipolar batteries equipped with the unit cell controller units according to the fourth to seventh embodiments as a battery module 800 that is installed in a floor underneath area of the vehicle.

Such a battery module 800 is comprised of a plurality of bipolar batteries that are connected in series or parallel or in combination of these connections through the main circuit tab electrodes 19 and 20. Such a battery module 800 may be used as a driving prime power supply of the vehicle 801 such as a battery propelled electric vehicle or a hybrid electric vehicle. An installation area of the battery module 800 is not limited to the floor underneath area in the vehicle and the battery module 800 may be located inside an engine room or a ceiling interior.

With the presently filed embodiment set forth above, since a hybrid vehicle and an electric vehicle which are safe and have favorable fuel consumption can be provided and less deterioration takes place in each unit cell of the battery while rendering the battery to have a prolonged life cycle, it becomes possible to extend a battery replacement cycle of the vehicle.

According to the stack type batteries of the respective embodiments set forth above, no possibility occurs in mutual contact between the shared voltage measurement tab electrodes to cause short-circuiting, and the shared voltages of the respective unit cells can be simply and reliably measured.

Although the invention has been described above by reference to certain embodiments of the invention, the invention is not limited to the embodiments described above. Modifications and variations of the embodiments described above will occur to those skilled in the art, in light of the teachings. The scope of the invention is defined with reference to the following claims.

## Claims

1. A stack type battery (1, 2, 3, 7) comprising:
- a plurality of unit cells (U) stacked in a stack direction (D3) to be connected in series;
- main circuit tab electrodes (19, 20) being disposed at both ends of the battery and extending oppositely in a first direction (D1) to be connected to an external element;
- shared voltage measurement tab electrodes (10 to 18, 210 to 218, 220 to 228, 310 to 318, 320 to 328, 710 to 718) formed on the plurality of unit cells (U), respectively, to allow voltages of the unit cells to be measured for the plurality of unit cells, the shared voltage measurement tab electrodes extending in a second direction (D2), and located to avoid at least adjacent tab electrodes from laying on the same horizontal position in a first direction (D1), and disposed at deviated positions to one another on a side surface (S, S') of the stack type battery along a length thereof and along the first direction (D1) intersecting the stack direction (D3), so as to prevent the tab electrodes from overlapping one another in the stack direction, with the first direction (D1), the second direction (D2) and the stack direction (D3) forming a rectangular coordinate system.

2. The stack type battery according to claim 1, wherein one of adjacent ones of the shared voltage measurement tab electrodes (10 to 18, 210 to 218, 220 to 228, 310 to 318, 320 to 328, 710 to 718) is located in a position deviated from that of the other one of the adjacent ones by a value greater than a width (W) of the other one in the direction (D1) intersecting the stack direction (D3).

3. The stack type battery according to claim 2, wherein the shared voltage measurement tab electrodes (10 to 18, 210 to 218, 220 to 228, 310 to 318, 320 to 328, 710 to 718) are disposed at equidistantly deviated positions.

4. The stack type battery according to any one of claims 1 to 3, wherein the shared voltage measurement tab electrodes (220 to 228) are formed on the side surface (S, S') of the stack type battery in a plurality of rows.

5. The stack type battery according to any one of claims 1 to 4, wherein the shared voltage measurement tab electrodes (320 to 328, 710 to 718) are further disposed on the other side surface (S'), opposing the side surface (S) of the stack type battery, at deviated positions in the direction (D1) intersecting the stack direction (D3).

6. The stack type battery according to any one of claims 1 to 5, wherein adjacent ones of the shared voltage measurement tab electrodes (710 to 718) of a plurality of the stack type batteries are mutually connected to allow adjacent ones of the plurality of the unit cells of the plurality of the stack type batteries (701) to be correspondingly connected in parallel.

7. The stack type battery according to any one of claims 1 to 6, wherein the stack type battery includes a bipolar electrode (30) comprised of a positive electrode active material layer (32), a current collector (31) and a negative electrode active material layer (33) laminated in this order, and an electrolyte layer (40) formed adjacent the bipolar electrode.

8. The stack type battery according to claim 7, wherein the electrolyte layer (40) includes a polymer solid electrolyte layer and at least one of the positive electrode active material layer (32) and the negative electrode active material layer (33) contains polymer solid electrolyte contained in the polymer solid electrolyte layer.

9. The stack type battery according to claim 7, wherein the stack type battery includes a lithium ion secondary battery.

10. The stack type battery according to claim 7, wherein negative electrode active material contained in the negative electrode active material layer (33) includes at least one of metal oxide and composite oxides composed of metal and lithium.

11. The stack type battery according to claim 7, wherein negative electrode active material contained in the negative electrode active material layer (33) includes carbon.

12. The stack type battery according to claim 11, wherein the carbon is hard carbon.

13. The stack type battery according to any one of claims 1 to 12, wherein a unit cell controller (CU1, CU2) is connected to the plurality of unit cells for controlling charging voltages of the plurality of unit cells.

14. The stack type battery according to claim 13, wherein a socket (SK1, SK2) having shared voltage tab connection electrodes (610 to 618, 620 to 628) is connected to the shared voltage measurement tab electrodes for allowing the unit cell controller to be connected thereto.

15. The stack type battery according to claim 14, wherein the unit cell controller (CU1, CU2) is formed with the socket in a unitary structure.

16. The stack type battery according to claim 14, wherein the shared voltage measurement tab electrodes (320 to 328) are further disposed on the other side surface (S'), opposing the side surface (S) of the stack type battery, at positions deviated in the direction (D1) intersecting the stack direction (D3), and the socket (SK1, SK2) is connected to each of a row of the shared voltage measurement tab electrodes (310 to 318), disposed on the side surface of the stack type battery, and a row of the shared voltage measurement tab electrodes (320 to 328) disposed on the other side surface opposing the side surface of the stack type battery.

17. The stack type battery according to claim 13, wherein the unit cell controller (CU1, CU2) includes a current bypass circuit (50) that, when a voltage of the unit cell exceeds a prescribed level, electrically connects a positive electrode and a negative electrode of the unit cell (55).

18. The stack type battery according to claim 17, wherein the current bypass circuit (50) includes an electric element (52) that conducts depending upon a voltage.

19. The stack type battery according to claim 18, wherein the current bypass circuit (50) further includes resistor element (54) connected to the electric element (52) in series.

20. The stack type battery according to claim 1, wherein the shared voltage measurement tab electrodes (10 to 18, 210 to 218, 220 to 228, 310 to 318, 320 to 328, 710 to 718) are diagonally and equidistantly arranged with one another on the side surface (S, S') of the stack type battery

21. A method of manufacturing a stack type battery (1, 2, 3, 7), comprising:
- stacking a plurality of unit cells (U) in a stack direction (D3) to be connected in series;
- providing main circuit tab electrodes (19, 20) at both ends of the battery oppositely extending in a first direction (D1) to be connected to an external element; and
- providing shared voltage measurement tab electrodes (10 to 18, 210 to 218, 220 to 228, 310 to 318, 320 to 328, 710 to 718) on the plurality of unit cells, respectively, to allow voltages of the unit cells to be measured for the plurality of unit cells, the shared voltage measurement tab electrodes extending in a second direction (D2), and located to avoid at least adjacent tab electrodes from lying on the same horizontal position in the first direction (D1), and disposed at deviated positions to one another on a side surface (S, S') of the stack type battery along a length thereof and along the first direction (D1) intersecting the stack direction (D3), so as to prevent the tab electrodes from overlapping one another in the stack direction, with the first direction (D1), the second direction (D2) and the stack direction (D3) forming a rectangular coordinate system.

22. The method according to claim 21, wherein the shared voltage measurement tab electrodes (10 to 18, 210 to 218, 220 to 228, 310 to 318, 320 to 328, 710 to 718) are diagonally and equidistantly arranged with one another on the side surface (S, S') of the stack type battery.

## Patentansprüche

1. Stapelbatterie (1, 2, 3, 7), mit:
- einer Mehrzahl von Einzelzellen (U), die in einer Stapelrichtung (D3) gestapelt sind, um seriell verbunden zu werden
- Hauptstromkreis-Elektrodenzungen (19, 20), die an beiden Enden der Batterie angeordnet sind und sich in eine erste Richtung (D1) entgegengesetzt erstrecken, um mit einem externen Element verbunden zu werden;
- Elektrodenzungen für die Messung der gemeinsam genutzten Spannung (10 bis 18, 210 bis 218, 220 bis 228, 310 bis 318, 710 bis 718), die auf der Mehrzahl der Einzelzellen (U) jeweils ausgebildet sind, damit Spannungen der Einzelzellen für die Mehrzahl der Einzelzellen gemessen werden können, wobei die Elektrodenzungen für die Messung der gemeinsam genutzten Spannung sich in eine zweite Richtung (D2) erstrecken und angeordnet sind, um zu verhindern, dass zumindest benachbarte Elektrodenzungen in einer ersten Richtung (D1) auf der gleichen horizontalen Position liegen, und an versetzt zueinander angeordneten Positionen auf einer Seitenfläche (S, S') der Stapelbatterie entlang einer Länge davon und entlang der ersten Richtung (D1) angeordnet sind, die die Stapelrichtung (D3) kreuzt, um zu verhindern, dass die Elektrodenzungen einander in der Stapelrichtung überlappen, wobei die erste Richtung (D1), die zweite Richtung (D2) und die Stapelrichtung (D3) ein rechtwinkliges Koordinatensystem bilden.

2. Stapelbatterie nach Anspruch 1, wobei eine der benachbarten Elektrodenzungen für die Messung der gemeinsam genutzten Spannung (10 bis 18, 210 bis 218, 220 bis 228, 310 bis 318, 710 bis 718) an einer Position liegt, die von der der anderen der benachbarten um einen Wert abweicht, der größer als eine Breite (W) der anderen in der Richtung (D1) ist, die die Stapelrichtung (D3) kreuzt.

3. Stapelbatterie nach Anspruch 2, wobei die Elektrodenzungen für die Messung der gemeinsam genutzten Spannung (10 bis 18, 210 bis 218, 220 bis 228, 310 bis 318, 710 bis 718) an abweichenden Positionen gleich weit entfernt angeordnet sind.

4. Stapelbatterie nach einem der Ansprüche 1 bis 3, wobei die Elektrodenzungen für die Messung der gemeinsam genutzten Spannung (220 bis 228) auf der Seitenfläche (S, S') der Stapelbatterie in einer Mehrzahl von Reihen ausgebildet sind.

5. Stapelbatterie nach einem der Ansprüche 1 bis 4, wobei die Elektrodenzungen für die Messung der gemeinsam genutzten Spannung (310 bis 318, 710 bis 718) zudem auf der anderen, der Seitenfläche (S) der Stapelbatterie gegenüberliegenden Seitenfläche (S') an abweichenden Positionen in der Richtung (D1) angeordnet sind, die die Stapelrichtung (D3) kreuzt.

6. Stapelbatterie nach einem der Ansprüche 1 bis 5, wobei die benachbarten Elektrodenzungen für die Messung der gemeinsam genutzten Spannung (710 bis 718) einer Mehrzahl der Stapelbatterien gegenseitig verbunden sind, damit benachbarte der Mehrzahl der Einzelzellen der Mehrzahl der Stapelbatterien (701) entsprechend parallel verbunden werden können.

7. Stapelbatterie gemäß einem der Ansprüche 1 bis 6, wobei die Stapelbatterie eine bipolare Elektrode (30) umfasst, die aus einer aktiven Materialschicht (32) einer positiven Elektrode, einem Stromkollektor (31) und einer aktiven Materialschicht (33) einer negativen Elektrode, die in dieser Reihenfolge geschichtet sind, und einer Elektrolytschicht (40) aufgebaut ist, die angrenzend zur bipolaren Elektrode ausgebildet ist.

8. Stapelbatterie nach Anspruch 7, wobei die Elektrolytschicht (40) eine feste Polymerelektrolytschicht umfasst und zumindest entweder die aktive Materialschicht (32) der positiven Elektrode oder die aktive Materialschicht (33) der negativen Elektrode den festen Polymerelektrolyt beinhaltet, der in der festen Polymerelektrolytschicht enthalten ist.

9. Stapelbatterie nach Anspruch 7, wobei die Stapelbatterie eine Lithiumionen-Sekundärbatterie umfasst.

10. Stapelbatterie nach Anspruch 7, wobei das in der aktiven Materialschicht (33) der negativen Elektrode enthaltene aktive Material der negativen Elektrode zumindest entweder ein Metalloxid oder Mischoxide umfasst, die aus Metall und Lithium zusammengesetzt sind.

11. Stapelbatterie nach Anspruch 7, wobei das in der aktiven Materialschicht (33) der negativen Elektrode enthaltene aktive Material der negativen Elektrode Kohlenstoff umfasst.

12. Stapelbatterie nach Anspruch 11, wobei der Kohlenstoff fester Kohlenstoff ist.

13. Stapelbatterie nach einem der Ansprüche 1 bis 12, wobei eine Einzelzellen-Steuerungs-/Regelungseinheit (CU1, CU2) mit der Mehrzahl der Einzelzellen verbunden ist, um die Ladespannungen der Mehrzahl der Einzelzellen zu steuern/zu regeln.

14. Stapelbatterie nach Anspruch 13, wobei ein Sockel (SK1, SK2) mit den Elektroden-Verbindungszungen für die gemeinsame Spannung (610 bis 618, 620 bis 628) mit den Elektrodenzungen für die Messung der gemeinsam genutzten Spannung verbunden ist, damit die Einzelzellen-Steuerungs-/Regelungseinheit damit verbunden werden kann.

15. Stapelbatterie nach Anspruch 14, wobei die Einzelzellen-Steuerungs-/Regelungseinheit (CU1, CU2) mit dem Sockel in einem einheitlichen Aufbau ausgebildet ist.

16. Stapelbatterie nach Anspruch 14, wobei die Elektrodenzungen für die Messung der gemeinsam genutzten Spannung (320 bis 328) zudem auf der anderen der Seitenfläche (S) der Stapelbatterie gegenüberliegenden Seitenfläche (S') in der Richtung (D1), die die Stapelrichtung (D3) kreuzt, an abweichenden Positionen angeordnet sind, und der Sockel (SK1, SK2) mit jeder Reihe der Elektrodenzungen für die Messung der gemeinsam genutzten Spannung (310 bis 318), die an der Seitenfläche der Stapelbatterie angeordnet ist, und einer Reihe der Elektrodenzungen für die Messung der gemeinsam genutzten Spannung (320 bis 328) verbunden ist, die auf der anderen der Seitenfläche der Stapelbatterie gegenüberliegenden Seitenfläche angeordnet ist.

17. Stapelbatterie nach Anspruch 13, wobei die Einzelzellen-Steuerungs-/Regelungseinheit (CU1, CU2) einen Strom-Bypassschaltkreis (50) umfasst, der eine positive Elektrode und eine negative Elektrode der Einzelzelle (55) elektrisch miteinander verbindet, wenn eine Spannung der Einzelzelle ein vorgegebenes Niveau überschreitet.

18. Stapelbatterie nach Anspruch 17, wobei der Strom-Bypassschaltkreis (50) ein elektrisches Element (52) umfasst, das in Abhängigkeit von einer Spannung leitet.

19. Stapelbatterie nach Anspruch 18 wobei der Strom-Bypassschaltkreis (50) ferner ein Widerstandselement (54) umfasst, das mit dem elektrischen Element (52) seriell verbunden ist.

20. Stapelbatterie nach Anspruch 1, wobei die Elektrodenzungen für die Messung der gemeinsam genutzten Spannung (10 bis 18, 210 bis 218, 220 bis 228, 310 bis 318, 710 bis 718) diagonal und in gleichem Abstand zueinander auf der Seitenfläche (S, S') der Stapelbatterie angeordnet sind.

21. Herstellungsverfahren einer Stapelbatterie (1, 2, 3, 7), das aufweist:
- Stapeln einer Mehrzahl von Einzelzellen (U) in einer Stapelrichtung (D3), um seriell miteinander verbunden zu werden;
- Bereitstellen von Hauptstromkreis-Elektrodenzungen (19, 20) an beiden Enden der Batterie, die sich in eine erste Richtung (D1) entgegengesetzt erstrecken, um mit einem externen Element verbunden zu werden; und
- Bereitstellen von Elektrodenzungen für die Messung der gemeinsam genutzten Spannung (10 bis 18, 210 bis 218, 220 bis 228, 310 bis 318, 710 bis 718) entsprechend auf der Mehrzahl der Einzelzellen, damit Spannungen der Einzelzellen für die Mehrzahl der Einzelzellen gemessen werden können, wobei die Elektrodenzungen für die Messung der gemeinsam genutzten Spannung sich in eine zweite Richtung (D2) erstrecken und angeordnet sind, um zu verhindern, dass zumindest benachbarte Elektrodenzungen in der ersten Richtung (D1) auf der gleichen horizontalen Position liegen, und an versetzt zueinander angeordneten Positionen auf einer Seitenfläche (S, S') der Stapelbatterie entlang derer Länge und entlang der ersten Richtung (D1) angeordnet sind, die die Stapelrichtung (D3) kreuzt, um zu verhindern, dass die Elektrodenzungen einander in der Stapelrichtung überlappen, wobei die erste Richtung (D1), die zweite Richtung (D2) und die Stapelrichtung (D3) ein rechtwinkliges Koordinatensystem bilden.

22. Verfahren nach Anspruch 21, wobei die Elektrodenzungen für die Messung der gemeinsam genutzten Spannung (10 bis 18, 210 bis 218, 220 bis 228, 310 bis 318, 710 bis 718) diagonal und in gleichem Abstand zueinander auf der Seitenfläche (S, S') der Stapelbatterie angeordnet sind.

## Revendications

1. Batterie de type empilée (1, 2, 3, 7), comprenant :
- une pluralité de cellules unitaires (U) empilées dans une direction de pile (D3) pour être connectées en série ;
- des électrodes à languette de circuit principal (19, 20) étant disposées aux deux extrémités de la batterie et s'étendant de façon opposée dans une première direction (D1) pour être connectées à un élément externe ;
- des électrodes à languette de mesure de tension partagée (10 à 18, 210 à 218, 220 à 228, 310 à 318, 320 à 328, 710 à 718) formées sur la pluralité de cellules unitaires (U), respectivement, pour permettre aux tensions des cellules unitaires d'être mesurées pour la pluralité de cellules unitaires, les électrodes à languette de mesure de tension partagée s'étendant dans une seconde direction (D2), et situées pour éviter au moins que les électrodes à languette adjacentes reposent sur la même position horizontale dans une première direction (D1), et disposées à des positions déviées les unes des autres sur une surface latérale (S, S') de la batterie de type empilée le long d'une longueur de celle-ci et le long de la première direction (D1) coupant la direction de pile (D3), de sorte à empêcher que les électrodes à languette se chevauchent les unes les autres dans la direction de pile, la première direction (D1), la seconde direction (D2) et la direction de pile (D3) formant un système de coordonnées rectangulaires.

2. Batterie de type empilée selon la revendication 1, dans laquelle une des électrodes adjacentes des électrodes à languette de mesure de tension partagée (10 à 18, 210 à 218, 220 à 228, 310 à 318, 320 à 328, 710 à 718) est positionnée dans une position déviée de celle de l'autre des électrodes adjacentes d'une valeur supérieure à une largeur (W) de l'autre dans la direction (D1) coupant la direction de pile (D3).

3. Batterie de type empilée selon la revendication 2, dans laquelle les électrodes à languette de mesure de tension partagée (10 à 18, 210 à 218, 220 à 228, 310 à 318, 320 à 328, 710 à 718) sont disposées à des positions déviées de façon équidistante.

4. Batterie de type empilée selon l'une quelconque des revendications 1 à 3, dans laquelle les électrodes à languette de mesure de tension partagée (220 à 228) sont formées sur la surface latérale (S, S') de la batterie de type empilée dans une pluralité de rangées.

5. Batterie de type empilée selon l'une quelconque des revendications 1 à 4, dans laquelle les électrodes à languette de mesure de tension partagée (320 à 328, 710 à 718) sont en outre disposées sur l'autre surface latérale (S'), à l'opposé de la surface latérale (S) de la batterie de type empilée, à des positions déviées dans la direction (D1) coupant la direction de pile (D3).

6. Batterie de type empilée selon l'une quelconque des revendications 1 à 5, dans laquelle des électrodes adjacentes des électrodes à languette de mesure de tension partagée (710 à 718) d'une pluralité des batteries de type empilées sont mutuellement connectées pour permettre aux cellules adjacentes de la pluralité des cellules unitaires de la pluralité des batteries de type empilées (701) d'être connectées en parallèle de façon correspondante.

7. Batterie de type empilée selon l'une quelconque des revendications 1 à 6, dans laquelle la batterie de type empilée comprend une électrode bipolaire (30) composée d'une couche de matière active d'électrode positive (32), d'un collecteur de courant (31) et d'une couche de matière active d'électrode négative (33) laminés dans cet ordre, et d'une couche d'électrolyte (40) formée de façon adjacente à l'électrode bipolaire.

8. Batterie de type empilée selon la revendication 7, dans laquelle la couche d'électrolyte (40) comprend une couche d'électrolyte solide de polymère et au moins une de la couche de matière active d'électrode positive (32) et de la couche de matière active d'électrode négative (33) contient un électrolyte solide de polymère contenu dans la couche d'électrolyte solide de polymère.

9. Batterie de type empilée selon la revendication 7, dans laquelle la batterie de type empilée comprend une batterie secondaire lithium-ion.

10. Batterie de type empilée selon la revendication 7, dans laquelle la matière active d'électrode négative contenue dans la couche de matière active d'électrode négative (33) comprend au moins un de l'oxyde métallique et des oxydes composites composés de métal et de lithium.

11. Batterie de type empilée selon la revendication 7, dans laquelle la matière active d'électrode négative contenue dans la couche de matière active d'électrode négative (33) comprend du carbone.

12. Batterie de type empilée selon la revendication 11, dans laquelle le carbone est un carbone dur.

13. Batterie de type empilée selon l'une quelconque des revendications 1 à 12, dans laquelle un contrôleur de cellule unitaire (CU1, CU2) est connecté à la pluralité de cellules unitaires pour contrôler les tensions de charge de la pluralité de cellules unitaires.

14. Batterie de type empilée selon la revendication 13, dans laquelle une prise (SK1, SK2) ayant des électrodes de connexion à languette à tension partagée (610 à 618, 620 à 628) est connectée aux électrodes à languette de mesure de tension partagée pour permettre au contrôleur de cellule unitaire d'être connecté à celle-ci.

15. Batterie de type empilée selon la revendication 14, dans laquelle le contrôleur de cellule unitaire (CU1, CU2) est formé avec la prise dans une structure unitaire.

16. Batterie de type empilée selon la revendication 14, dans laquelle les électrodes à languette de mesure de tension partagée (320 à 328) sont en outre disposées sur l'autre surface latérale (S'), opposée à la surface latérale (S) de la batterie de type empilée, à des positions déviées dans la direction (D1) coupant la direction de pile (D3), et la prise (SK1, SK2) est connectée à chacune des électrodes à languette de mesure de tension partagée (310 à 318), disposée sur la surface latérale de la batterie de type empilée, et une rangée des électrodes à languette de mesure de tension partagée (320 à 328) disposées sur l'autre surface latérale à l'opposé de la surface latérale de la batterie de type empilée.

17. Batterie de type empilée selon la revendication 13, dans laquelle le contrôleur de cellule unitaire (CU1, CU2) comprend un circuit de dérivation de courant (50) qui, lorsqu'une tension de la cellule unitaire dépasse un niveau déterminé, connecte électriquement une électrode positive et une électrode négative de la cellule unitaire (55).

18. Batterie de type empilée selon la revendication 17, dans laquelle le circuit de dérivation de courant (50) comprend un élément électrique (52) qui assure la conduction en fonction d'une tension.

19. Batterie de type empilée selon la revendication 18, dans lequel le circuit de dérivation de courant (50) comprend en outre un élément de résistance (54) connecté à l'élément électrique (52) en série.

20. Batterie de type empilée selon la revendication 1, dans laquelle les électrodes à languette de mesure de tension partagée (10 à 18, 210 à 218, 220 à 228, 310 à 318, 320 à 328, 710 à 718) sont agencées de façon diagonale et équidistante les unes par rapport aux autres sur la surface latérale (S, S') de la batterie de type empilée.

21. Procédé de fabrication d'une batterie de type empilée (1, 2, 3, 7), consistant à :
- empiler une pluralité de cellules unitaires (U) dans une direction de pile (D3) pour les connecter en série ;
- prévoir des électrodes à languette de circuit principal (19, 20) sur les deux extrémités de la batterie s'étendant de façon opposée dans une première direction (D1) pour être connectées à un élément externe ; et
- prévoir des électrodes à languette de mesure de tension partagée (10 à 18, 210 à 218, 220 à 228, 310 à 318, 320 à 328, 710 à 718) sur la pluralité de cellules unitaires, respectivement, pour permettre aux tensions des cellules unitaires d'être mesurées pour la pluralité de cellules unitaires, les électrodes à languette de mesure de tension partagée s'étendant dans une seconde direction (D2), et situées pour éviter au moins que les électrodes à languettes adjacentes reposent sur la même position horizontale dans une première direction (D1), et disposées à des positions déviées les unes des autres sur une surface latérale (S, S') de la batterie de type empilée le long d'une longueur de celle-ci et le long de la première direction (D1) coupant la direction de pile (D3), de sorte à empêcher que les électrodes à languette se chevauchent les unes les autres dans la direction de pile, la première direction (D1), la seconde direction (D2) et la direction de pile (D3) formant un système de coordonnées rectangulaires.

22. Procédé selon la revendication 21, dans lequel les électrodes à languette de mesure de tension partagée (10 à 18, 210 à 218, 220 à 228, 310 à 318, 320 à 328, 710 à 718) sont agencées de façon diagonale et équidistante les unes par rapport aux autres sur la surface latérale (S, S') de la batterie de type empilée.
